# EUROPEAN PATENT APPLICATION

(11) **EP 3 859 148 A1**
(43) Date of publication of application: **04.08.2021**
(21) Application number: 20154184.4
(22) Date of filing: 28.01.2020
(51) Int. Cl.: F03D 15/00

(54) **WIND TURBINE**

(71) Applicant: Vervent B.V., 1786 RD Den Helder (NL)
(72) Inventor: de Vries, Eize, 3818 VE Amersfoort (NL)
(74) Representative: van Essen, Peter Augustinus

(57) **Abstract**

The invention provides a wind turbine, comprising:
- a turbine rotor comprising a set of turbine rotor blades and defining a rotor rotational axis, said turbine rotor mounted on a tower;
- an electrical generator for converting mechanical energy of said turbine rotor into electrical energy, comprising a generator rotor drivingly coupled to said turbine rotor and mounted on said tower;
- a transmission system coupling said turbine rotor to said generator rotor, and comprising:
an upstream stepped planetary gearbox comprising a upstream ring gear drivingly coupled to said turbine rotor, upstream first planet gears drivingly coupled with said upstream ring gear, upstream second planet gears, each rotationally coupled with a first planet gear, and an upstream sun gear drivingly coupled to said upstream second and coupled to said generator rotor, wherein said upstream second planet gears are axially offset to one another.

## Description

### Field of the invention

The invention relates to a wind turbine and a transmission for a wind turbine.

### Background of the invention

WO2015016703 relates to a wind turbine comprising a rotor, coupled to a rotor shaft defining a rotor rotational axis, said rotor comprising a set of rotor blades, an outer vertical drive shaft and an inner vertical drive shaft coaxially within said first vertical drive shaft, said inner and outer vertical drive shafts coupled to said rotor shaft, an electrical generator for converting mechanical rotational energy of said rotor into electrical energy and comprising coaxial inner and outer generator rotors coupled to said inner and outer drive vertical shafts, and a gear system coupling said inner and outer drive shafts to said rotor shaft. The gear system allows coupling said rotor shaft to said inner and outer vertical drive shafts with their drive shaft rotational axis and said rotor rotational axis allowing the horizontal turbine rotor axis to be tilted by an angle of between 1 and 10 degrees.

WO9521326 according to its abstract describes a wind power generation system that comprises: a wind turbine with a horizontal rotor mounted on a bearing and able to rotate about the vertical axis, a primary energy unit, a mechanical transmission with a reduction gear; and a system for making the wind turbine rotate about the vertical axis. A mechanical transmission reduction gear, which has output which is designed as two coaxial shafts whose kinematic connection with the reduction gear input shaft ensures that the coaxial shafts rotate in opposite directions. It has a primary energy unit in the form of two counter-rotating co-operating work units, each of which is connected to one of the coaxial reduction gear shafts. The structural design of the system compensates for the reactive torque acting on the wind turbine in the horizontal plane, without any need for additional power-consuming mechanisms.

In particular, WO2019022595 of applicant provides a wind turbine, comprising:
- a turbine rotor comprising a set of turbine rotor blades and defining a rotor rotational axis, said turbine rotor mounted on a tower;
- a gearbox, drivingly coupled to said turbine rotor and having an output end for in operation increasing an output end rotational speed;
- an electrical generator for converting mechanical energy of said turbine rotor into electrical energy, said electrical generator mounted at an end of said tower near said rotor rotational axis and comprising a first generator rotor and an second generator rotor having an air gap between then and mounted rotatable with respect one another for converting rotational motion into electrical energy;
- a transmission system comprising:
   * an outer drive shaft and an inner drive shaft concentric within said outer drive shaft;
   * a drive shaft gear system coupling said inner drive shaft and said outer drive shaft to said gearbox with their rotational axes functionally perpendicular to said rotor rotational axis, wherein
said drive shaft system comprises a drive shaft gear drivingly coupled with said gearbox and said drive shaft gear engaging a first drive gear on said inner drive shaft, and engaging a second drive gear on said outer drive shaft, and arranged for in operation rotating said inner and outer drive shaft opposite to one another, and wherein one of said inner drive shaft and said outer drive shaft is drivingly coupled to said first generator rotor and the other of said inner drive shaft and said outer drive shaft is drivingly coupled to said second generator rotor.

US4291233 according to its abstract describes: "A wind-turbine generator system which transforms the rotational energy of a wind driven turbine blade into rotation in opposite directions of a rotor and a stator of a dynamoelectric machine to generate electrical power. A bevel gear rotating with the turbine blade drives two pinion gears and associated concentric shafts in opposite directions. The two shafts combine with a planetary gear set to provide the desired oppositely directed rotation. One of the shafts is associated with a ring carrier and drives a ring gear in one rotational direction. The other shaft drives a planet carrier in the opposite rotational direction. The planetary gear set is arranged such that a sun gear is driven in the direction opposite to that of the ring gear. A rotor is affixed to the sun gear by a spider support structure, and a stator, affixed to rotate with the ring gear, surrounds the rotor. The rotor and stator are thus rotated in opposite, mechanically and electrically additive, directions."

### Summary of the invention

It is an aspect of the invention to provide an alternative wind turbine design.

There is thus provided a wind turbine, comprising:
- a turbine rotor comprising a set of turbine rotor blades and defining a rotor rotational axis, said turbine rotor mounted on a tower;
- an electrical generator for converting mechanical energy of said turbine rotor into electrical energy, comprising a generator rotor drivingly coupled to said turbine rotor and mounted on said tower;
- a transmission system coupling said turbine rotor to said generator rotor, and comprising:
   an upstream stepped planetary gearbox.

The upstream stepped planetary gearbox comprises a upstream ring gear drivingly coupled to said turbine rotor, upstream first planet gears drivingly coupled with said upstream ring gear, upstream second planet gears, each rotationally coupled with a first planet gear, an upstream sun gear drivingly coupled to said upstream second and coupled to said generator rotor, and said upstream second planet gears are axially offset to one another.

In another aspect, the upstream stepped planetary gearbox comprises a common carrier rotationally carrying said upstream first and second planetary gears rotatable about their axes of rotation, rotationally carrying said upstream sun gear, and rotationally carrying said upstream ring gear.

In another aspect, the upstream stepped planetary gearbox comprises each said upstream first planetary gear rotatably carried on a fixed pin and each said upstream second planetary gear is rotatably carried on a said fixed pin, and said upstream first planetary gear and said upstream second planetary gear on a said pin are rotationally coupled, in particular via a flexible coupling, more in particular coupled via a shaft running through said fixed pin.

In another aspect, the upstream stepped planetary gearbox comprises a common carrier carrying a pin rotatably carrying the upstream sun gear.

There is further provided a wind turbine, comprising:
- a turbine rotor comprising a set of turbine rotor blades and defining a rotor rotational axis, said turbine rotor mounted on a tower;
- an electrical generator for converting mechanical energy of said turbine rotor into electrical energy, comprising a generator rotor drivingly coupled to said turbine rotor and mounted on said tower;
- a transmission system coupling said turbine rotor to said generator rotor, and comprising:
   * a bevel gearbox comprising a bevel drive gear coupled to the turbine rotor and a first bevel pinion gear and a second bevel pinion gear, with said first and second bevel pinion gears having a common rotational axis and in operation rotating counter directional;
   * a downstream planetary gearbox comprising a downstream ring gear, downstream planet gears and a downstream sun gear, with said first bevel pinion drivingly coupled to one of said downstream ring gear and said downstream planet gears, said second bevel pinion drivingly coupled to another of said downstream ring gear and said downstream planet gears, and said generator rotor drivingly coupled to said downstream sun gear.

The wind turbine is suitable for a new generation of wind turbines with a capacity of 10 MW or more for a wide variety of wind climates. In particular, the design allows for the next generation large-scale wind turbines in a 12-16MW+ class. It can be operated in wind class areas IEC I, II, III+ and IV+. The amount of rotating parts is limited as much as possible together with the use of journal bearings for enhanced reliability performance. The design is in particular suited for larger wind turbines due to specific technical solutions taking into consideration (minimizing) component and systems deflections and deformations inherent to large scale wind turbine concepts, and economic reasons. It allows a compact design with a high-speed (in wind turbine sense) output.

The current design is suitable for both upwind and downwind designs of a wind turbine.

In the current description, elements can be coaxial. In this respect, coaxial refers to elements that each rotate about a rotational axis, and these rotational axes are in-line or coincide.

Some of the differences with other, earlier designs are amongst others the following.

In fact, the downstream planetary gear can be integrated into the bevel gearbox. In an embodiment, the downstream planetary gearbox is attached to, in particular integrated with, one of the bevel pinion gears.

The turbine shaft can be a hollow shaft that is held in two pre-biased bearings, in particular cone-bearings in a housing. Such a construction part is also referred to as a main bearing unit or MBU. An example of such a construction part that can be used in the current invention is described by the firm Eolotec, for instance in US2015030277. In such a shaft, the shaft comprises a tapered section extending between spaced-apart bearings. The pre-biasing or pre-loading of the bearings towards one another may be controlled using a control device. Other constructions with for instance a single rotor bearing known to a skilled person may also be used.

Many further aspect are described in the attached depending claims. Many other aspects are additionally summarized in the attached clauses.

In an embodiment of the drivetrain, the turbine shaft comprises the main bearing unit or MBU. In this embodiment, the bearing unit is the only main element rigidly attached to a cast main carrier, in turn forming a structural main component of the nacelle structure or chassis. Further main components are attached to this main bearing unit via flange connections and in no other manner connected directly to the chassis. A main benefit of this solution is that any dynamic (non-torque) deformations and deflections in the chassis and/or main carrier do not negatively impact drivetrain integrity.

Often, in order to avoid or to take up rotor-induced bending moments and additional loads and load changes, a turbine shaft is coupled to a flexible or elastic coupling. In wind turbines, various flexible couplings are known. An example of a suitable flexible coupling is described for instance by Geislinger GmbH, and referred to as a "Geislinger Compowind coupling". In general, such a coupling combines torsional stiffness with built-in flexibility in response to rotor-induced bending loads, thus providing a torsionally resilient shaft coupling. A flexible coupling may comprise different concept solutions but the main functional operating principle remains at virtually eliminating any chances of harmful non-torque loads (bending moments) entering the gearbox.

The current wind turbine can comprise any general type of generator. The generator can for instance comprise an axial-flux generator. Alternatively a radial-flux generator can be used. These generator types may be of a conventional generator design.

The generator can be a permanent magnet generator, but may just as well comprise a synchronous motor-type generator that needs an externally activated generator-rotor field current. Using a permanent magnet generator, and in particular one of the type "outer runner" or outer-rotor with an outer generator rotor having permanent magnets and an inner stator with coils, however, largely reduces power coupling complexity, i.e., no large currents have to be transferred between rotating generator parts and a static body, prior to feeding into a common power electronic converter.

In an embodiment, the first and second bevel pinion gears are positioned at opposite ends of a line piece intersecting a drive shaft rotational axis.

In an embodiment, the drive train, in particular the transmission system, further comprises an upstream planetary gearbox. 'Upstream' in this relates to positioned between the turbine rotor and the bevel gearbox. In an embodiment thereof, the upstream planetary gearbox comprises a ring gear drivingly coupled to said turbine rotor, and a sun gear drivingly coupled to said bevel gear of said bevel gearbox. Such an upstream planetary gearbox providing a planetary transmission may be single-stage. Alternatively, such a transmission may be 1.5 stage.

In an embodiment, the planetary transmission comprises a planet gear system having a first and second planetary gear on a common shaft, with first planetary gear drivingly coupled with said ring gear and said second planetary gear drivingly coupled with said sun gear. In a specific embodiment, the planet carrier is stationary with respect to the nacelle and is thus attached to the upstream gearbox housing that is stationary with respect to the nacelle. In another specific embodiment, also the sun gear shaft part facing the turbine rotor is supported by bearings placed inside the planet carrier structure. The other sun gear output shaft part could be flexibly attached to the bevel gear shaft via a cardanic joint or alternative flexible link. The stationary planet carrier solution provides a compact sturdy and structurally stiff configuration. This specific reliability-enhancing measure aims at a minimized scaling-related impact at the critical interface between planets and sun gear due to inherent deflections and deformations. The combination of these latter measures together with cardanic or flexible joint with the bevel gear are both key enablers for further drivetrain and wind turbine scaling towards 16MW+ and beyond.

In a 1.5-stage gearbox embodiment, the gearbox provides a step-up gear ratio of at least i = 1:10.

This step-up gear ratio for the upstream gearbox can be increase further by for instance increasing the ration of the first and second planetary gear on one common shaft with respect to one another. Increasing the diameter of the second (larger) planetary gear is not always possible. In an embodiment, the second planetary gears can be axially displaced with respect to one another while being meshingly coupled with the sun gear.

In an embodiment thereof, the upstream planetary gearbox comprises at least two sets of planet gear systems, with at least two second planetary gears in substantially one first planet plane, and at least one second planetary gear axially (i.e., along the turbine rotor rotational axis) displaced with respect to the first planet plane.

In an embodiment thereof, the upstream planetary gearbox comprises at least a first and a second set of planet gear systems, with each set of planet gear systems comprising at least two second planetary gear systems. The second planet gears of one set of planet gear systems in substantially one first planet plane, and the second planet gears of the second set of planet gear systems in a second planet plane which is axially (i.e., along the turbine rotor rotational axis) displaced with respect to the first planet plane.

These embodiments allow an increase of the second planet gear diameter, allowing an increase of gear ratio.

There are many advantages to providing an upstream planetary gearbox in addition to the current design.

A bevel gearbox in earlier designs is driven directly by the rotor shaft. These designs could allow limited input torques, and matching limitation to power rating, because the rotor torque is transmitted to two pinions gears only. The current design much easier allows for 12-16MW+ ratings and associated much larger input torques, because it is here transmitted by 5 or more planets in a compact planetary gear arrangement.

Earlier designs describe a planetary gearbox incorporated in a joint housing with the generator, and likely generator placement in the tower base. In an embodiment for the current design, the downstream planetary gearbox is integrated within the bevel gearbox. Thus each individual pinion drives either the planet carrier or the ring gear.

The downstream planetary gearbox can be fully integrated with the upper or lower pinion, which as a major innovative benefit prevents slight movements (deflections and/or deformations) of the pinion to impact integrity and lifetime of this gearbox.

The full transmission system and generator can be located inside the nacelle, whereby the generator placement is close (e.g. 0.5m to 1.0m) above the gearbox housing;

In an embodiment, the generator is brushless, and therefore does not require slip rings and brushes.

In an embodiment, the transmission system comprises a transmission housing and said generator comprises a generator housing, and wherein said generator housing is attached to said transmission housing, in particular said generator housing is attached on top of said transmission housing, opposite said tower.

In an embodiment, the turbine rotor is mounted on said tower with its rotor rotational axis functionally perpendicular to a tower longitudinal axis. In this respect, 'functionally perpendicular includes a slight tilt angle of between 5 and 10 degrees that is often used to compensate for bending of the turbine blades towards the tower.

In an embodiment, the generator comprises a housing and a cooling system.

In an embodiment, the cooling system comprises a gas cooling system, said gas cooling system comprising a gas cooling inlet in said generator housing for entering a flow of cooling gas into said generator, and a gas cooling outlet for allowing gas to exit said generator housing.

In an embodiment, the stationary stator coil housing of the outer-rotor generator is a ring-type structure filled with a cooling liquid being circulated. This serves as a main cooling system for generator temperature management. In an alternative embodiment, the generator is a classic inner-rotor type whereby the generator rotor turns inside the stator. The stator housing with cooling liquid inside now has the stator coils facing inward.

In an embodiment, the rotor is provided with one or more vanes for setting said cooling gas inside said housing in motion, in particular designed for in operation inducing a flow of cooling gas from said cooling gas inlet to said cooling gas outlet. In this way, internal heat dissemination and cooling performance through optimal gas mixing can be optimized.

In an embodiment, the stator is provided with one or more provisions, in particular air vent passages, whereby an air pump forced pressurized cooling air through the stator coils inside the air gap between the rotor and stator in motion aimed at enhanced generator heat dissipation. In particular, such air passages are designed for in operation inducing a flow of cooling gas through the air gap when passing from said cooling gas inlet to said cooling gas outlet.

The current design in an embodiment comprises the integration in the transmission system of a small-size planetary gearbox inside the bevel gearbox. Counter-rotating output shafts of the bevel gearbox are inputs for the planetary gearbox. These are two counter-rotating input rotations in an embodiment that are inside the bevel gearbox converted to rotation of a single high-speed output shaft, which in turn is coupled to a conventional generator like a permanent magnet outer-rotor or inner-rotor generator or an electrically excited generator.

In an embodiment, the planetary gearbox is fully integrated into the bevel gearbox.

In an embodiment, the fully integrated planetary gearbox but without an 'own' outer housing, has a planet carrier that is directly attached inside the bevel gearbox to the upper bevel pinion bottom flange. The lower bevel pinion is via a shaft, preferably a flexible shaft or a rigid shaft with flexible couplings, attached to the ring gear of this planetary gearbox. In an alternative arrangement, the upper bevel pinion is attached to the ring gear and the lower bevel pinion is attached to the planet carrier. The sun gear in an embodiment comes as a single assembly with a sun gear shaft. The latter passes through the upper bevel pinion. In an embodiment, it is supported by journal bearings inside, and is thus functionally also the planetary gearbox output shaft. The upper bevel pinion gear and the planetary gearbox in an embodiment provide a fully integrated assembly, whereby slight movements (displacements) of this upper bevel pinion gear under load do not harm the integrity of the downstream planetary gearbox main components. This dedicated design feature ensures that overall and longer than 25-year gearbox design requirements can be met. A second essential lifetime enhancing contributing factor is the use of journal bearings in all bevel pinion gear and downstream planetary gearbox positions.

In an embodiment, the upper and lower bevel pinions are supported by stationary shafts (pins). Journal bearings are integrated within these pinions to absorb the radial and axial forces. In general, pinion axial forces in the direction towards the centre are large with bevel gear drives. Therefore, great care has been taken to address this issue through a special design of the upper and lower pin. The gearbox output shaft is supported by journal bearings incorporated inside the pin. The downstream planetary gearbox is attached to the pin.

There are in fact several possible alternative arrangements for the planetary gearbox:
A. The planetary gearbox atop the upper bevel gear pinion. In other words, outside and on top of the main gearbox housing. In this layout, either the ring gear or planet carrier is directly attached to the upper pinion via for instance a flange connection. A shaft, in an embodiment a flexible shaft, is attached to the lower bevel pinion gear. In this embodiment, the shaft passes through the upper bevel pinion gear and is connected to either the ring gear or planet carrier, depending upon design preferences. The sun gear now requires a separate bearing support solution and the sun gear with shaft assembly forms again the gearbox output shaft.
B. The planetary gearbox on top of the lower bevel gear pinion inside the large bevel gear.
C. The planetary gearbox below the lower bevel gear pinion outside the original gearbox.

Note: also in arrangements A, B, or C, either the planet carrier or the ring gear is directly attached and driven by the bevel pinion gear it is attached to, and the other main component (the other one selected from the planet carrier and ring wheel) by the other opposing bevel pinion gear.

### Gearbox speeds

In a 12MW earlier design from applicant, the turbine rotor rated speed is 8RPM. For the calculations, step-up ratio's in the 1.5-stage gearbox and bevel gearbox have been raised slightly to 1:15.3 and 1:8.2 (2x 4.1) respectively. This would add up to 1004RPM equivalent generator speed.

In the 12MW of the current design, the turbine rotor rated speed is again 8RPM, and the step-up ratio's in the 1.5-stage gearbox and bevel gearbox 1:15.3 and 1:8.2 (2x 4.1) respectively. This multiplies to 502RPM for both bevel gear pinions each. Like in the earlier design, one bevel pinion gear rotates clockwise and the other one anticlockwise. Each of these bevel pinion gears in turn drives a planetary gearbox main component (i.e., one selected from the ring gear and the planet carrier) but in opposite directions, which results in a doubling of the 'normal' planetary gearbox step-up ratio.

This results for various planetary gearbox step-up ratio's in the following corresponding gearbox output speeds:

| Step-up ratio | Gearbox output speed [RPM] |
|---|---|
| 1:3 | 3,012. |
| 1:4 | 4,016 |
| 1:5 | 5,020 |

In an alternative embodiment, the planetary gearbox step-up ratio could be further increased to a 'practical' current maximum of, for example, 1:7 with corresponding rise in generator speed.

If again in an alternative embodiment a bigger rotor is fitted and the rated rotor speed drops to for example 7RPM instead of 8RPM in the first calculation example, generator speed could be flexibly adapted by increasing the step-up ratio of the planetary gearbox. This offers substantial flexibility for system fine-tuning and LCOE optimizing during scaling.

Transmission system output speed is generator input speed. The new solution with added planetary gearbox offers thus much higher generator speeds compared to the earlier design. This allows downsizing the generator from for instance about ø3.15m x 1m (outer-rotor diameter x air gap length) to an indicative ø1.6m x 0.4m, but these are indicative figures. A preference is thereby for a 'disk-shape' generator rather than a 'barrel-shape' generator for its reduced demand for active materials (magnet, copper and magnetic steel) superior generator heat dissipation performance. Equally important, the smaller generator in general reduces demand for rare earths to 2 - 4% of what would originally be required for a direct drive PMG of the same rating and rotor size and similar rated tip speed (e.g. 90m/s). These indicative rare earths figures are based on a comparison with direct drive, and commonly used 600kg/MW magnets figure for this specific drivetrain concept.

### Downstream planetary gearbox and generator orientation

The fictive central shaft or rotational axis-line between or connecting the bevel gear pinions can in the current design in operation be in the vertical plane, the horizontal plane, or any intermediate position in between measured at a full circle. The generator can therefore also be vertical, and as such facing upward or facing downward, be horizontal, for instance facing right or left, or be in any intermediate position in between vertical and horizontal, measured at a full circle. The fictive central shaft or rotational axis-line between or connecting the bevel gear pinions itself can be central, for instance with straight or spiral type bevel pinion gears. The bevel, or be offset, for instance with hypoid bevel gears corresponding in shape to those used in car differentials.

An embodiment with the fictive central bevel gear shaft for the two pinions in horizontal position allows mounting the holding brake at the pinion opposite the pinion with integrated planet gearbox. This arrangement is an alternative for holding brake mounting at the low-speed shaft behind the rotor, and it allows a substantial reduction in size and cost due to the combination higher speed resulting in lower torque.

A relatively conventional inner or outer-rotor generator that can now be deployed, forms part of the current patent application. In an embodiment, it has an open structure for enabling optimal temperature management, but with a spacious lightweight enclosure (cover) for protecting the generator internals against the harsh marine impact. The enclosure or housing furthermore provides optimal mixing of cold and hot air flow as an integral part of generator temperature management / heat dissipation strategy.

Sufficient generator lifetime is achieved through use of journal bearings at all bearing positions together with an either independent oil bath system, or alternatively through integration with a transmission system lubrication system. Advanced generator cooling features include the forced blowing of cooling air into the generator air gap. An alternative (supplementary) generator cooling enhancement option is a spoked outer-rotor ring support structure for promoting the optimal mixing of cooling air inside the generator. Another dedicated design feature is a combined structural support structure & water-cooling mantle for attaching the stator coils. Incorporating all necessary appliances like cooling fans, air hoses, and heat exchanger is rather uncomplicated due to the spacious area inside the (static) stator housing.

In an embodiment, the generator comprises a bottom structure which is mechanically attached to the gearbox upper cover. The linkage between the generator-rotor and gearbox outer shaft is provided by an intermediate carbon-reinforced plastic or other shaft material, with at each side a flexible coupling for avoiding that gearbox displacements and/or distortions could negatively impact generator integrity and lifetime.

In an embodiment, a torque limiter (KTR or otherwise) is integrated with the upper flexible coupling linking the gearbox output shaft and the generator rotor. A torque limiter with integrated flexible coupling like KTR Ruflex is a semi-standard assembly and will be located at the generator (input) drive shaft and mounting flange interface.

In an embodiment, the very fast running generator (3000 - 5000RPM or more) has journal bearings as the preferred solution.

A holding disk brake can be located either at the drivetrain main shaft, be attached to one of the bevel gear pinions, or located at the gearbox output shaft.

A torque limiter with integrated flexible coupling is a semi-standard assembly and will be located at the generator (input) drive shaft.

### Main benefits summary

1. Uncomplicated cost-effective 'ultra-high' speed geared drivetrain with minimized number of rotating elements including bearings;
2. Parts and bearing count comparable to a medium-speed geared concept with two-stage planetary gearbox, but now with much smaller and cheaper conventional generator (one stator and one rotor);
3. Comparable bearing count with respect to applicants earlier design, but substantially reduced generator size, mass and cost;
4. Only slight increase in gearbox mass and cost compared to applicants earlier design;
5. Overall increase in torque density (Nm/kg) performance compared to applicants earlier design, due to integrated downstream planetary gearbox
6. Elimination of the large current rotary transmitter; generator power is directly fed from the generator-stator into the frequency converter;
7. Overall decrease in drivetrain complexity, mass and cost compared to applicants earlier design;
8. With a permanent magnet generator, only minimal demand for rare earths of approximately 2 - 4% compared to the amount in an equivalent rated direct drive generator;
9. With further rotor scaling (= decreasing rotor speeds) unparalleled flexibility in choosing optimal generator rated speeds enabled by the small added planetary gearbox;

The invention further relates to a wind turbine comprising a turbine rotor drivingly coupled to an upstream planetary gearbox which is drivingly coupled to a transmission having two opposite gears both drivingly coupled to a downstream planetary gearbox which is drivingly coupled to a generator rotor for generating electrical energy. In an embodiment, the transmission with opposite gears is a functionally right-angled transmission. This is also referred to as bevel gearbox, or shortly bevel gear.

In an embodiment, the bevel gear has two opposite bevel gears, known as bevel pinions. The upper bevel pinion is integrated with the downstream planetary gearbox located inside the bevel gear assembly. The downstream planet gear sun gear shaft passes through the upper bevel gear pinion and is also the full gearbox output shaft. In an embodiment, the downstream planet carrier is mechanically attached to the downstream upper planet bottom section, and they rotate as a single assembly. The downstream ring gear is attached to the downstream planet carrier casting via a journal bearing arrangement, together creating a structurally strong and stiff single unit. The downstream ring gear is attached to the lower pinion gear via a flexible shaft or a rigid shaft with two flexible couplings. The downstream planetary gearbox in an embodiment is 'open' without a separate housing and it uses the same lubrication system of the upstream planetary gearbox, i.e. the 1.5-stage planetary gearbox, and with the bevel gearbox.

In an embodiment, the downstream ring gear can be attached to the upper pinion and the downstream planet carrier linked to the lower pinion.

Alternative embodiments for the downstream planetary gearbox are above the lower pinion, below the lower pinion, or above the upper pinion, and with the two variants for downstream ring gear and downstream planet carrier attachments.

The term "substantially" herein, such as in in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 schematically depicts an embodiment of the wind turbine;
Figure 2 a schematic cross sectional, schematic view of the interior of the gondola or nacelle part of figure 1;
Figure 3 shows details of an embodiment of the transmission system and generator;
Figure 4 shows an embodiment of a generator, in particular an outer-rotor permanent magnet generator, and
Figure 5 an alternative transmission part.

The drawings are not necessarily on scale

### Description of preferred embodiments

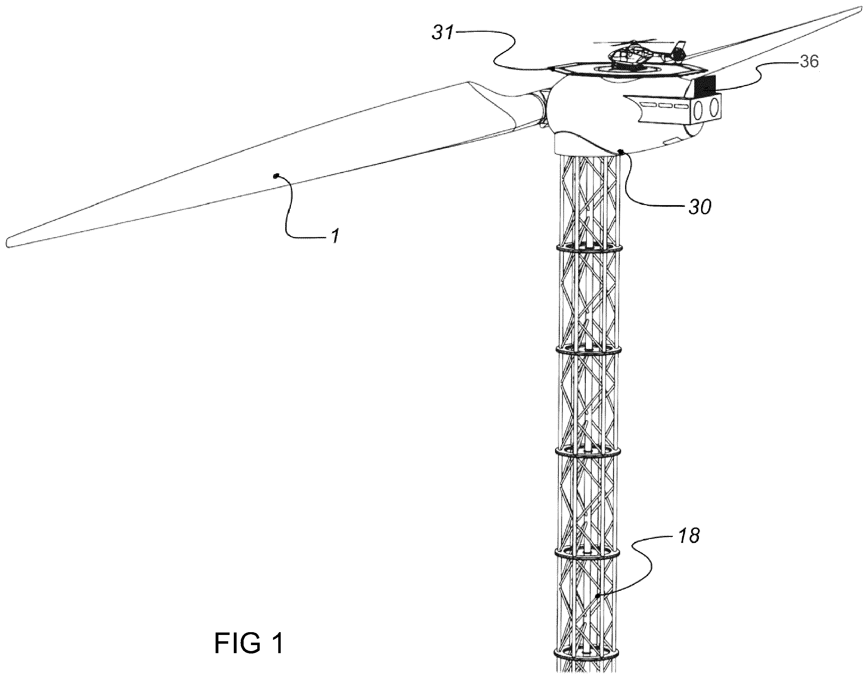

Figure 1 schematically shows an example of a two-bladed downwind wind turbine of the current invention. The wind turbine has a tower 18. Tower 18 carries a gondola or nacelle 30. Nacelle 30 rotatably holds a turbine rotor 1. In order to allow positioning the turbine rotor 1 in the wind, the nacelle 30 can be mounted rotatably on the tower 18, allowing setting a yaw angle of said nacelle 30.

The current design of the wind turbine was found to be in particular advantageous in a wind turbine having a capacity of 8-10 MW and even bigger, with matching rotor sizes for different IEC Wind Classes, because that represents the next major step in technology scaling. This is expected to at least partly require new innovative solutions for technologically enabling such scaling step and in parallel drive down lifetime based generating costs. In figure 1 a downwind wind turbine is illustrated, but the current design may also be applied to an upwind wind turbine.

The nacelle 30 comprises in this embodiment a helicopter deck 31 and has external cooling radiators 36.

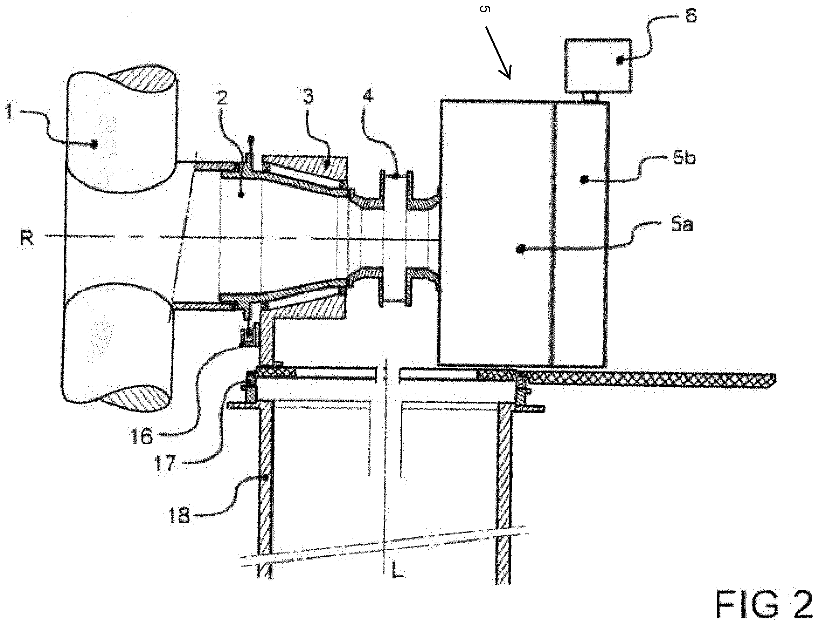

In this embodiment, the nacelle 30 houses a drive train coupling the turbine rotor 1 via a transmission system 5 to a generator 6, see figure 2.

In figures 2-4, the drive train with transmission system 5 and generator 6 will be explained in detail. The drawings are schematic, and not all elements and parts may be in their right size or mutual size. The drawing is a cross section along a plane defined by a rotor rotational axis R (striped line) and a tower longitudinal line L.

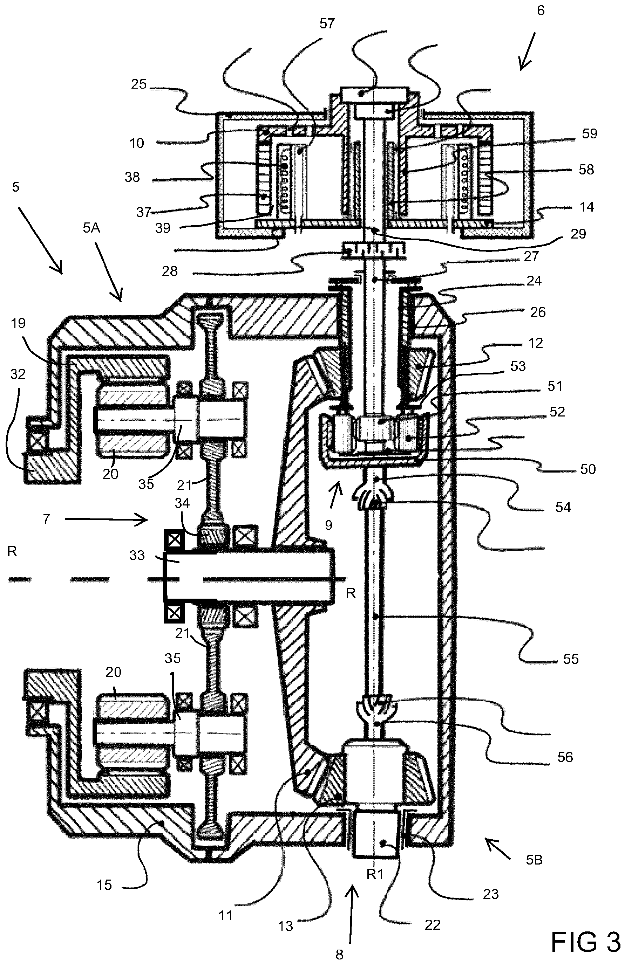

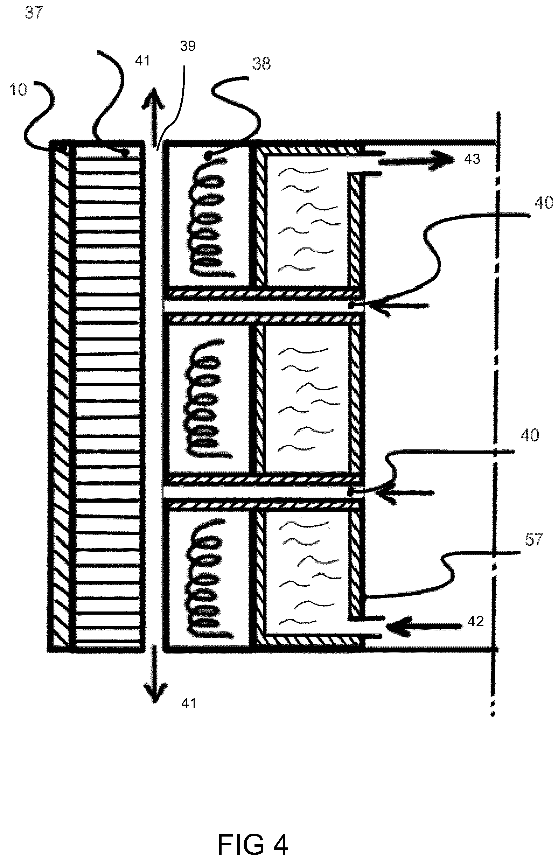

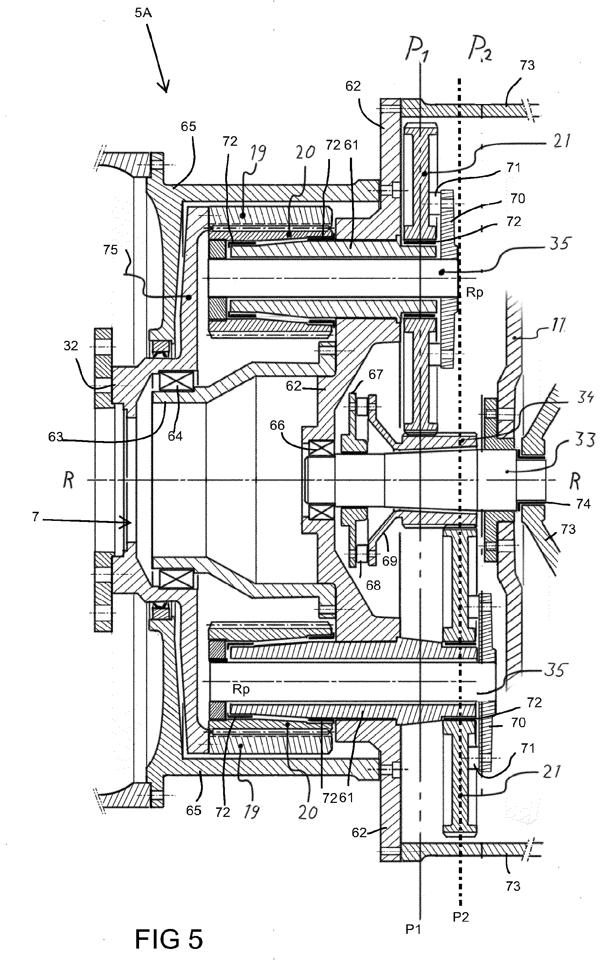

Figure 2 shows an embodiment of the drive train with the turbine rotor 1 coupled via transmission system 5 to generator 6. Figure 3 will explain an embodiment of the transmission system 5 and generator 6 in more detail, and figure 4 shows an embodiment of a generator 6 in more detail. The transmission system can be divided into parts 5A and 5B, that will be explained below. Figure 5 shows an alternative embodiment of part 5A of the transmission system 5.

In the drawings, many instances of bearings will be indicated by the classical indication of rectangles with a cross inside. These do not always comprise a separate reference number, but is considered to be evident for a skilled person.

Figure 2 shows that the wind turbine comprises a turbine rotor 1 which comprises a set of turbine blades and which defines the rotor rotational axis R (striped line). The turbine rotor 1 can have two or more blades. When having two blades, installation is simplified and use of the helicopter deck 31 for actual helicopter landing purposes is enabled, as can be seen in the drawing.

The turbine rotor 1 is here connected to a hollow turbine rotor shaft 2 which is here depicted of the type discussed above. The turbine rotor shaft 2 is provided with a mechanical lock 16 which allows locking the wind turbine in a locked position.

The nacelle or gondola 30 is rotatably mounted on tower 18 via a bearing 17 (schematic).

The turbine rotor shaft 2 is mounted into a housing 3 that is provided with front and end bearings and is tapered. This construction as such is known, described and patented by Eolotec, for instance. It comprises a front and rear, pre-loaded tapered roller bearing. In an alternative embodiment (not described), a functionally comparable solution could incorporate journal bearings. This housing 3 is attached to a frame attached to the nacelle. At the opposite end of the housing 3, the other parts of the drive trains extend.

Subsequently, the turbine rotor shaft 2 is coupled to a flexible coupling 4. Such a flexible or elastic coupling 4 can for instance be of the type already discussed. In an embodiment, a flexible coupling comprises two disks which are coupled using a flexible or elastic material.

The current embodiment of the wind turbine of figure 2 comprises a transmission system 5 coupled to the flexible coupling 4 which is subsequently coupled to a generator 6. The transmission system 5 in particular has two parts 5A and 5B that are mutually coupled and can be integrated into a common housing, in an embodiment. This will be explained in figure 3 and figure 5.

In the embodiment of figure 3, the transmission system 5 comprises subsequently an upstream planetary gearbox 7 drivingly coupled at one end with the turbine rotor 1, and at its other end with an incoming end of a bevel gearbox 8. In drawing 2, the upstream planetary gearbox in schematically indicated with 5A. The bevel gearbox 8 is at an outgoing end drivingly coupled to a downstream planetary gearbox 9. This is indicated 5B in drawing 2. The downstream planetary gearbox 9, in turn, is drivingly coupled to a generator rotor 10 of generator 6. In this respect, 'upstream' is towards the turbine rotor 1, and 'downstream' is towards the generator 6.

In figure 3, in this embodiment transmission system 5 has incoming upstream gearbox shaft 32 drivingly coupled to the flexible coupling 4 and an outgoing upstream gearbox shaft 33 drivingly coupled to the bevel gearbox 8. The transmission system 5 allows for the wind turbine to be designed for much larger power ratings.

First, we discuss the upstream planetary gearbox in the depicted embodiment of figure 3.

The upstream planetary gearbox 7 in this embodiment is of a modified planetary gear design, which is also referred to as a 1.5 stage gearbox. The upstream planetary gearbox 7 is also referred to as a multi-stage epicyclic gearing and enables a maximum step-up gear-ratio of at least i = 1:10. Alternatively, the final set of gears together driving a central sun wheel at the output shaft could be skipped. Such an embodiment would result in a conventional 1-stage planetary gearbox with maximum step-up gear-ratio of around i = 1:6.4, and as consequence increases input torque loads of the bevel gearbox 8. This in turn would lower generator revolutions for a given rotor speed and increase the dimensions and cost of the generator. The arrangement is likely less technically feasible for especially the overall drivetrain concept and in particular the upper ratings with associated higher rated torque levels.

The currently described embodiment of the upstream planetary gearbox 7 is as follows. The incoming upstream gearbox shaft 32 holds an upstream ring gear 19. Mounted in the housing are here two upstream planetary gear elements that each hold upstream first planetary gear 20, and upstream second planetary gear 21 representing main elements of the extra '0.5-stage' of the gearbox. The upstream first planetary gear 20 and upstream second planetary gear 21 are rotationally fixedly mounted on a common shaft 35. The common shaft 35 is positionally fixed in a gearbox housing or alternatively inside a stationary planet carrier, keeping it positioned in the housing or in the stationary planet carrier. The common shafts 35 can rotate on their respective rotational axes. As the diameter of the upstream second planetary gear 21 is larger than the diameter of the upstream first planetary gear 20, an additional increase of rotational speed is provided. The upstream second planetary gears 21 engage and in operation drive an upstream sun gear 34. The upstream sun gear 34 is rotationally fixed on the outgoing gearbox upstream gearbox shaft 33. The drawing shows in the cross section two planetary gear sets. In practice, five or more planetary gear sets can be used, all engaging meshingly with the upstream sun gear 34, and positioned around the upstream sun gear 34.

In the current drive train, it is also possible to provide one or more additional gearboxes for further increasing the rotational speed of the generator 6. Using the current modified upstream planetary gearbox 7, the rotational speed is increased with a factor of about minimal 10. The first gear ration of the upstream ring gear 19 and the upstream first planetary gears 20 can be up to a maximum 1:6.4. The second gear ration of the upstream second planetary gears 21 and the upstream sun gear 34 can be up to 1:2 up to 1:4. Thus, the combined gear ratio can be up to 12 or more. This reduces load (torque) on the bevel gearbox 8.

In the current transmission system 5, upstream planetary gearbox 7 is drivingly coupled to bevel gearbox 8. We will now describe the currently depicted embodiment of the bevel gearbox 8 of figure 3.

The outgoing upstream gearbox shaft 33 is in a rotationally fixed manner and drivingly coupled to a gear wheel or bevel drive gear 11. In the current embodiment, bevel drive gear 11 has its toothed gearing here at an angle of between 60 and 70 degrees with respect to the rotor rotational axis R. Bevel drive gear 11 engages a first bevel pinion gear 12 and a second bevel pinion gear 13. Here, both the first bevel pinion gear 12 and second bevel pinion gear 13 have a conical shape. They taper towards the rotor rotational axis R. The teeth surface of the bevel drive gear 11 has a correspondingly conical shape. In alternative embodiments, the first and second bevel pinion gears 12, 13 can be inclined bevel gears, off-set gears, Zerol bevel gears, helical gears, spiral bevel gears, straight bevel gears or crown gears. The toothed part of the bevel drive gear 11 is adapted to the first and second bevel pinion gears 12, 13. The bevel gearbox 8 in fact defines a double, right angle transmission. Both bevel pinion gears 12, 13 in operation rotate in opposite directions.

In the current embodiment of figure 3, the transmission system 5 comprises a common housing 15. The second bevel pinion gear 13 comprises a second bevel pinion shaft 22 that is held in the common housing 15 using second pinion journal bearing 23.

First bevel pinion gear 12 in this embodiment comprises a hollow bevel pinion shaft 24 that is held in the common housing using a first pinion journal bearing 26.

In the embodiment depicted, the bevel pinion gears 12, 13 are inline on a common rotational axes R1. This rotational axis R1 here intersects the turbine rotor rotational axis R. There are known angled gearboxes that allow positioning such that the rotational axis of the pinion gears do not intersect the turbine rotor rotational axis R.

As mentioned earlier, the downstream planetary gearbox 9 can be drivingly coupled to the bevel gearbox 8 at various positions. In general, the generator 6 will be positioned near one of the bevel pinion gears 12, 13. This nearest bevel pinion gear will be indicated as the first bevel pinion gear 12. The generator 6 furthermore for easy construction will be positioned with its generator rotor rotational axis in line with the rotational axes R1 of both bevel pinion gears 12, 13. Usually, that line will cross the rotor shaft rotational axis R. Furthermore, in general the generator will be placed radially outside the first bevel pinion gear, or on the end of the first bevel gear that is remote from the rotor shaft rotational axis R.

The downstream planetary gearbox 9 can be drivingly coupled in general between the first and second bevel pinion gears 12, 13.

Alternatively, the downstream planetary gearbox 9 can be positioned radially outside the first bevel pinion 12 and between the first bevel pinion 12 and the generator 6. In other words, the downstream planetary gearbox 9 is positioned between the bevel pinions 12, 13 and the generator 6. It only requires a coupling shaft from the second bevel pinion 13 through the first bevel pinion and drivingly coupling to the downstream planetary gearbox 9. One end of the downstream planetary gearbox 9 is drivingly coupled to the first bevel pinion gear 12, and the other end of the downstream planetary gearbox 9 is drivingly coupled to the generator rotor 10. This places the generator 6 more remote from the rotor shaft rotational axis R.

Alternative, the downstream planetary gearbox 9 can be positioned radially outside the second bevel pinion gear 13. This position, most remote from the generator 6 and with both bevel pinion gears 12, 13 between the downstream planetary gearbox 9 and the generator 6, requires a coupling shaft from the first bevel pinion through the second bevel pinion and drivingly coupling to the downstream planetary gearbox 9, and a relatively long, concentric shaft coupling the downstream planetary gearbox 9 to the generator 6, this shaft further running through both bevel pinions. For easy and compact construction, it will/can be located between the rotational axis R and one of the bevel pinion gears 12, 13.

In figure 3, the first positioning of the downstream planetary gearbox 9 between the first and second bevel pinion gears 12, 13 is depicted. Here, the downstream planetary gearbox 9 is positioned close to the radial inner end of the first bevel pinion gear 12. One of the parts of the downstream planetary gearbox 9 may even be integrated with the first bevel pinion gear 12.

The downstream planetary gearbox 9 has the following general parts. A downstream ring gear 50, a downstream sun gear 51, and downstream planet gears 52 mounted on a downstream planet gear frame 53.

In the embodiment of figure 3, the parts of the downstream planetary gearbox 9 drivingly couples between the bevel gearbox 8 and the generator in the following way. The downstream planet gear frame or planet carrier 53 is drivingly coupled with the first bevel pinion gear 12. In particular, it can be attached to or integrated with the first bevel pinion gear 12. The downstream ring gear 50 is drivingly coupled to or with the second bevel pinion gear 13. This can for instance be done using a flexible shaft 55. In the current embodiment, the downstream ring gear 50 comprises a flexible coupling 54 coupled to the flexible shaft 55 that in turn is coupled to further flexible coupling 56 that is drivingly coupled to the second bevel pinion gear 13. Downstream sun gear 51 is drivingly coupled to/with a transmission system output shaft 27. In this embodiment, a flexible coupling or spline coupling 28 drivingly couples transmission system output shaft 27 to generator rotor shaft 29.

In order to protect the generator 6 especially from grid-induced events like sudden power outage, creating high instant drivetrain peak loads, in the current embodiment of figure 2 the inner drive shaft is coupled to generator 6 via an overload clutch or torque limiter. An overload clutch as such is known in the art.

Functionally, bevel gearbox 8 provides an additional gear ratio of between 1 and 10 to the transmission system 5 of the drive train. Furthermore, the bevel gearbox 8 provides an angled transmission (angular drive ; bevel pinion ; mitre gear ; right angle bevel gearing ; bell crank ; angle drive) with two counter-rotating bevel pinion gears 12, 13. Thus, the current transmission system 5 first provides a gear ratio of up to a 'gearbox engineering maximum' in the range of 1:350-750. In particular, a practical step-up gear ratio range between 1:375-500 can be attained.

Thus, a rotational speed of the rotor of the generator of more than 3.000 rotations per minute may be possible. In an embodiment, up to 3.000-5.000 rotations per minute may be possible. This can result in a smaller generator diameter, for instance.

The rotor and the complete drive train are here mounted in the tower 18 perpendicular to a tower longitudinal axis L. In an alternative embodiment in particular in an upwind wind turbine, rotor and drive train can be mounted on the tower with the rotor rotational axis R at a tilt angle α away from a perpendicular (90°) coupling. The tilt angle α can be important in that allows an increase of the distance between the tower and the rotor (tip), thus minimizing chances of the blade tips hitting the tower and reducing the disturbing influence of the tower on the rotor. A tilt angle α is usually chosen between about 5 degrees and a maximum 10 degrees for not negatively impacting aerodynamic performance.

The housing of the transmission system 5 can be one single housing. Alternatively, the housing can be divided into two coupled housing parts, for instance having a split at the second planet gears 34. This may facilitate access and repair possibilities. The flexible coupling 4 in the current embodiment may be removed by de-boulting, for instance, and may be lifted out of the current drive train, thus providing space for subsequent removal of (part) of the housing. In an alternative embodiment, the upstream planetary gearbox 7 and the bevel gearbox 8 have each have a separate housing.

Figure 3 also shows an embodiment of an electrical generator 6 in cross section. In figure 4, details of the generator 6 are shown in more detail. The electrical generator 6, shortly 'generator', has a housing 25. The housing 25 has fixing provisions for fixing the housing to the transmission system 5, here to the housing of the transmission system 5. Usually, the generator housing 25 will be housed inside the nacelle 30.

Generator 6 is of the outer rotor type and comprises an outer generator rotor 10 and an (inner) stator 38 + 57. The rotor 10 and stator 38 + 57 are concentric, and define an air gap 39 between them. The rotor 10 is coupled to the drive shaft 27 that results from the downstream planetary gearbox 9. In the current embodiment, the generator drive shaft 27 can coupled to the generator rotor 10 via a coupling 28, in an embodiment an overload clutch forming an integrated assembly with flexible coupling. In fact, here as an example of a possible coupling, a plate couples the transmission system output shaft 27 to the outer generator rotor 10. The flexible shaft or rigid shaft connecting the lower pinion 13 with the downstream ring gear may be coupled via a gear spline coupling as developed and patented by RENK AG of Germany or alternative design flexible coupling types. This to compensate for slight dynamic misalignment resulting from deflections and distortions, and to a lesser degree levy length changes. The gear spline or other design flexible couplings are attached to the downstream ring gear 50 respectively lower pinion 13 via the upper and lower adapter units 54 and 56.

The outer generator rotor 10 may comprise permanent magnets to provide alternation magnetic poles. The stator body 57 comprises coils 38 for inducing a voltage and a current. As the stator 11 in this embodiment is static with respect to the frame and nacelle, no power coupling, like wipers or sliding contacts or brushes, is needed. As discussed before, instead of the radial flux generator of figure 2, also an axial flux generator can be considered. In the current inventive concept, such a generator would also have a rotor and a stator that is static with respect to the nacelle.

In order to be able to resist or take up high torsion plus allowing some bending deflections or to reduce weight, the shafts 55 can be made from a fibre reinforced composite material. It provides a torque shaft. Suitable fibre reinforced composites comprise fibre material that is commercially sold under the names Dyneema, Aramid, and Kevlar. It was found, however, that in order to provide a high degree of rigidity and strength, carbon fibre reinforced composites are preferred.

In the current embodiment, the generator has one or two journal bearings, which are attached to the hollow generator pin 58, and hollow generator-rotor shaft 59 and forms the structural support of the generator-rotor 10.

In the current embodiment the generator 6 comprises a (light weight) generator housing 25. The generator 6 further comprises a cooling system. In the current embodiment, the cooling system comprises a combined gas and liquid cooling system.

The gas cooling system comprises a gas inlet 40 in the generator structural housing 14 and a gas outlet 41 in the generator housing 25. The inlet 40 and outlet 41 and air circulation pump and air-air or air-liquid heat exchanger are in the schematic drawing not drawn. The can also be as remote from one another as possible.

The gas cooling system, usually based upon air that circulates inside the generator 6, in an embodiment comprises air displacement means in the generator rotor. In the current embodiment, the generator rotor 10 is provided with vanes or fins and/or spokes and/or holes to set air inside the generator 6 in motion.

In an embodiment, the air displacement means on the rotor provide a pump function, displacing air from the gas inlet 40 to the gas outlet 41. The gas cooling system may comprise a pump device for circulating air through the generator housing 25. The gas cooling system in the current embodiment includes a heat exchanger gas-coupling the gas inlet 40 and the gas outlet 41. In the current embodiment, the heat exchanger is of the gas-liquid heat exchanger type. It allows the gas of the gas cooling system to exchange heat with liquid of the liquid cooling system which will be discussed further. In the discussed embodiment, in the gas cooling system, the inner generator rotor 11 is further provided with gas displacement means. Gas channels 28 are provided in the inner generator rotor 11 for further mixing or allowing mixing of gas inside the generator 38.

In an embodiment, the stator structural housing is hollow ring-shape body 57 in which cooling liquid circulates, and which is integral part of the generator temperature management system. The liquid inlet and liquid outlet 42, 43 are (not drawn) connected to a circulation pump and liquid-liquid or liquid-air heat exchanger.

In an embodiment, the stator housing incorporates at least one air inlet pipe or nozzle along the stator circumference along a fictive horizontal axis, and at least one gas channel or nozzle in the vertical plane. An air pump forces cooling air in between the stator coils and the air gap 39 where most of the generator heat is generated. If two or more gas channels are placed in the vertical plane, they can be positioned horizontal relative to the generator base or at various inclined positions to promote optimal cooling air mixing and heat dissipation performance.

In figure 5, an alternative embodiment of the upstream planetary gearbox 7 of the transmission system 5 is explained. In figure 3, the transmission system 5 is split in two parts, upstream transmission system part 5A and downstream transmission system part 5B. The downstream part 5B comprises the bevel gearbox 8 and downstream planetary gearbox 9. The upstream part 5A comprises the upstream planetary gearbox 7. The upstream planetary gearbox 7 in figure 3 comprises a 1.5 step planetary gearbox 7, also referred to as stepped planetary gearbox 7. For brevity, it will usually not be referred to as "upstream" as in the description of figure 3 and 4. In figure 5, a redesign is made of that particular gearbox 7 to further optimise the current wind turbine design. It should be noted that the particular stepped planetary gearbox of figure 5 may also be applied in other wind turbine designs that do not comprise the bevel gearbox 8 discussed so far. It may for instance be used in a more traditional wind turbine design having a (one or more) further downstream planetary gearboxes and/or a 'traditional spur gear coupling the stepped planetary gearbox of figure 5 to a generator 6. For brevity, in the description of figure 5, the addition "upstream" will not always be used. It is evident, however, that the stepped planetary gearbox 7 of figure 5 is close to and usually coupled directly to the turbine rotor shaft as first or upstream part of the transmission system 5.

The redesigned stepped planetary gearbox 7 (or 1.5-stage) design of figure 5 in an embodiment focuses at meeting the huge input torque demands linked to next-generation 12 - 16MW+ offshore wind turbines with matching 215 - 260m rotor diameters. It incorporates journal bearings whenever possible and feasible, which is a key contributing factor to achieve a compact gearbox design with competitive torque density (Nm/kg).

Furthermore, the stepped planetary gearbox 7 of figure 5 and associated dimensioning enables matching specific power-rating combinations in dependence on IEC Class I - III, aimed at offering optimal LCOE performance for every specific wind climate. The gearbox input (rotor) side therefore comprises in an embodiment six planet gears instead of four in the original design for absorbing the corresponding 16 - 24MNm+ range incoming torque levels. In particular, these are provided in two sets of planetary gear systems in two planet planes PI, P2 or respective first and second plane of upstream second planetary gear PI, P2. There may be more planes and sets, increasing complexity. The second planetary gears may also all be axially offset with respect to one another. This requires a complex alignment, but may allow even larger second planetary gears and increase transfer ratio. The six second planetary gears 21 may for instance be grouped into two sets of opposed second planetary gears 21 in two axially offset planes. This also allows larger diameters.

The layout of the stepped planetary gearbox 7 with (here) six planetary gears systems each comprising a first planetary gear 20 and a second planetary gear 21 thus comprises first planetary gears 20 rotating inside the ring gear 19 at the gearbox input side or upstream side which offers a first step-up ratio of in an embodiment 1:4.93. It also offers over one metre reduction in outer housing diameter, now at about 4100mm. The second planetary gears 21, each in an embodiment featuring inclined or helical-shape teeth, downstream with respect to the first planetary gears 20, are individually attached to a shared drive shaft, sheared with a matching first planetary gear 20. All planetary gear systems are subdivided into two separate sets of three planetary gear systems each. These gear sets rotate in this embodiment in a separate plane (PI, P2) and together drive a 'double' or axially extended sun gear 34, and as an assembly represents the stepped planetary gearbox output stage. A second step-up ratio in the reference stepped gearbox 7 is in an embodiment about 1:3.73.

This offers a total step-up ratio of the specific first and second step-up ratio's is 1:18.33. This is a good first compromise between containing ring gear cost being a key gearbox cost driver and a parallel aim to maximise the step-up ratio. The latter focused at curbing size and cost of the bevel gear through a lower (remaining) step-up ratio required supplemented by a reduced torque to be transmitted.

The stepped planetary gearbox 7 of figure 5 comprises at least nine innovative features offering multiple benefits that will be explained below.

A first innovative feature is a compact central 'tool' carrier 62. The central carrier 62 comprises a structurally stiff element holding or carrying further main load-bearing elements. The central carrier 62 in the embodiment of figure 5 is part of the transmission housing. In the embodiment of figure 5, it couples an upstream housing part 65 and a right or downstream housing part 73. The elements attached to the central carrier 62 comprise (here) six planet gear pins (stationary shafts), each rotatably housing a planetary gears common shaft 35. Fixed to or near an upstream end the planetary gears common shaft 35 comprises a first planetary gear 20 rotatably fixedly attached to it. The planetary gears common shaft 35 thus rotates about planetary rotational axis Rp with its first planetary gear 20. The planetary gears common shaft 35 drives a second planetary gear 21. This second planetary gear 21 may be rotatably fixedly attached to the planetary gears common shaft 35. In the current embodiment of figure 5, a driving disk 70 is rotatably fixedly attached to the planetary gears common shaft 35. Via a flexible coupling 71, the driving disk 70 rotatingly drives the second planetary gear 21 (that planetary gear 21 is downstream from the first planetary gear 20). Furthermore, the central carrier 62 comprises a ring gear pin 63 fixedly attached or mounted to it. The ring gear pin 63 holds the ring gear 19, here attached via ring gear carrier disk 75 and a bearing 64.

Finally, the central carrier 62 holds a rear/upstream output shaft bearing 66 that bears the outgoing upstream gearbox shaft 33. As in figure 3, it can be attached to the bevel drive gear 11.

A second feature is the (upstream) ring gear carrier disk 75 bearing support at the spaciously designed static hollow shaft or ring gear pin 63, which is structurally stiff. However, the ring gear carrier disk 75 provides an interface element that may introduce built-in design flexibility for promoting optimal load transfer between rotating upstream ring gear 19 and planet gears 20.

A third feature is a 'tool carrier' principle, comprising the already discussed central (tool) carrier 62 mentioned above, and further layout possibility, which enables a vertical gearbox split. The first split is between the outer left/upstream housing part 65 and the central carrier 62, and the second split between the right/downstream housing part 73 incorporating the bevel gearbox 8 and the secondary or downstream planetary gearbox 9, and in fact transmission system part 5B (figure 3). The central carrier 62 itself can also be individually removed and reassembled. The gearbox-splitting further enables 'uncomplicated' vertical gearbox assembly and up-tower repairs during the operational period without needing an expensive jack-up or other installation vessel.

The 'tool carrier' provided by the introduction of the central carrier 62 also offers a compact integrated gearbox system solution that minimizes negative gearbox and drivetrain interface impacts due to deflections and deformations. The latter are critical factors when designing large-scale mechanical drivetrains for turbines from about >10MW ratings. One crucial interface-related benefit of the new design is the near elimination of loads induced in the outer housing causes deflections and deformations being passed on to critical gearbox internals.

This is enabled by the fact that within the new design parameters the outer housing 65, 73 and central carrier 62 are linked only at an outer housing mounting ring. The main pin or ring gear pin 63 attached to the central carrier 62 directly supports the rotating ring gear 19, offering a structurally stiff and strong overall solution. The left housing part 65 of the gearbox housing remains directly linked to the MBU but via a shortened intermediate connection and now at a much larger radius for optimized load transfer.

A fourth innovative element is the (here six) stationary shafts or planet gear pin 61 supporting gearbox first planet gears 20 and second planet gears 21, coupled together via separate planetary gear torque/common shafts 35. This couples each matching first planetary gear 20 and second planetary gear 21 forming a planetary gear pair. The stationary shafts or planet gear pins 61 (three short, and three longer) are attached (here firmly pressed inside) to or mounted on the central carrier 62, creating a structurally strong and stiff interface connection.

Part of this solution is further that the planet gear support function and torque transfer function are split through applying a separate torque shaft 35 for each first planetary gear/ second planetary gear set or pair. The planetary gear torque/common shafts/axles 35 in turn provide a mechanical linkage between the first planetary gears 20 and the second planetary gears 21. The first planetary gears 20 are rotationally fixedly coupled to their planetary gears common shaft/axle 35. This is for instance achieved via a spline connection, friction device or otherwise, and either rigid or with some built-in flexibility for optimizing the load distribution between ring gear and planetary gears.

Each of the first planetary gears 20 is rotationally coupled to one of the ("its") second planetary gears 21. It is here proposed to use a flexible coupling. Furthermore, both the first planetary gear 20 and its coupled second planetary gear 21 are mounted via one or more bearings 72 on a fixed planetary gear shaft or planet gear pin 61. In this specific embodiment, a driving disk for the upstream second planetary gear 70 is rotationally fixed to the planetary gears common shaft 35. Via a flexible coupling 71, the driving disk 70 is drivingly, in particular rotationally fixedly, coupled to a second planetary gear 21. Thus, coupling of the first planetary gear 20 with its second planetary gear 21 is done via the chain formed by the planetary gears common shaft 35, the driving disk for upstream second planetary gear 70, and the flexible coupling 71. The mechanical linkage is thus via an intermediate driving element 70, supplemented by for instance a shrink fit and flexible element 71 in between driving element 70 and second planetary gear 21. A (stationary) planet gear pin 61 and torque shaft 35 combined solution further offers favourable materials fatigue performance compared to a single rotating shaft holding the first and second planetary gears 20, 21. This absorbs both bending moments and torque transfer loading.

Fifth innovative feature is that the stationary shafts or pins 61, 63 plus central carrier 62 solution eliminates negative impact of otherwise unavoidable (anticlockwise with turbine rotor at left) shaft-gear moments of force. These moments of force result from the combinations of ring gear 19 with first planetary gears 20, and of second planetary gears 21 with sun gear 34. This is an inherent but perhaps not always recognised phenomenon for stepped planetary gearboxes like the one of figure 5. The issue itself is not easy to solve especially for alternative solutions with rotating shafts and two support bearings positioned in between the gears. If not addressed adequately, it could hamper gearbox integrity and lifetime.

Sixth innovative feature is the "axial displaced second planetary gears". Here, second planetary gears 21 are in two planes PI, P2 at the stepped gearbox 7 output/downstream side. This feature allows substantially higher step-up ratios compared to an equivalent size stepped planetary gearbox but with a single row/plane of second/output planetary gears 21. A contributing reason is here that for a given ring gear pitch circle the maximum achievable step-up ratio goes down with increasing number of first planetary gears. Another contributing factor putting a limit to the maximum step-up ratio of 'conventional' stepped planetary gearboxes is that the second planetary gear circles could either touch or overlap each other, either one being functionally impossible. In the current example, there are six second planetary gears 21, arranged in two planes PI, P2 of each three second planetary gears 21. Other configurations, number of planes, number of second planetary gears etc. may be possible, for instance three planes of two secondary planetary gears each, but also two planes of four second planetary gears each, two planes of five second planetary gears each.

A seventh feature is a flexible linkage of each individual drive shaft 35 with a matching second planetary gear 21. This innovative arrangement allows slight movement of these gears out of their 'natural' plane of rotation.

The eighth feature involves a hollow sun-gear 34, fitting loosely over a tapering bevel gear shaft 33. This arrangement in a dual function serves both as support shaft for the bevel drive gear 11 and sun gear 34. Gearbox shaft 33 transfers sun gear 34 output torque to the bevel drive gear 11 input side. The sun gear 34 in this embodiment has a flexible mechanical linkage or coupling to the gearbox shaft 34. The overall arrangement eliminates the need for dedicated sun gear bearing(s) support. A further benefit is that it creates a 'floating' sun-gear through controlled flexibility of the linkage. This flexibility characteristic means here torsional stiff for optimal torque transfer, plus only minimal axial movement allowed, and finally some angular and parallel movements relative to the central rotational axis R allowed as essential. In this embodiment of figure 5, one end of gearbox shaft 33 has bearing 66 holding it in the central carrier 62, and the other end of gearbox shaft 33 has bearings 74 holding it here in the right or upstream structural bearing support 73. Here, the bevel drive gear is rotationally fixedly coupled to the gearbox shaft 33.

A driving element, for instance a driving disk 67, is also rotationally fixedly coupled to the gearbox shaft 33. Sun gear 34 is freely arranged on the gearbox shaft 34. It comprises a flange 69 that is rotationally coupled to the driving disk 67 via a flexible sun gear coupling 68.

The ninth feature involves either opposed inclined teeth angles or an opposed helix shape when applying helically shaped teeth, for the two second planetary gear sets (in P1 and in P2) and the sun gear 34. In general, the sun gear 34 is axially extended. This measure enhances optimal interaction and load distribution within this complex dynamic sub-system, which involves the simultaneous movement of second planetary gears 21 in planes and with the matching axially extended sun gear 34. It is in parallel aimed at minimizing axial movements resulting from balancing axial loads at the axially extended sun gear 34.

A feature eleven involves the gearbox shaft 33 having an upstream end supported by an asymmetric spherical roller bearing 66, incorporated in the central carrier 62. This arrangement allows an uncomplicated solution for absorbing the substantially axial loading that originates from the bevel gearbox 8 (figure 3). It in addition offers essential extra systems flexibility in counteracting the possible negative impact of deflections and deformations in between the left and right parts of the gearbox as a whole.

Feature twelve relates to the following. The gearbox design of figure 5 can be shortened by about 800mm, and the linkage between MBU and gearbox by another roughly 1000mm. This as a key benefit allows the complete transmission system 5 to have its centre of mass closer to the tower centre or longitudinal axis. The mass of the transmission system 5 can be reduced by an estimated 80 - 125 tonnes.

The stepped planetary gearbox 7 of figure 3 has a large ring gear diameter and most likely 'only' four planets turning in a single plan. The individual second planetary gear outer circles of that design are already very close to each other. The maximum step-up ratio of the stepped planetary gearbox 7 of figure 3 is therefore in practical designs most likely limited to around 1:15. Furthermore gearbox mass and cost can both be considerable. With five or more second planetary gears 21 that may be required for higher, for instance 10MW and more, ratings with corresponding input torques, the maximum step-up ratio could even drop to between 1:10 and 1:12, unless ring gear diameter is again increased. This would finally result in a 'dead-end' strategy. The design of figure 5, or aspects of it, seeks to solve this. The features described above may be combined, like in figure 5. Also, separate elements of features may be used in the design of figure 3.

**Design of figures 3 and 5 compared**

| | *Figure 3* | *Figure 5* |
|---|---|---|
| Planets | 4, indicative 12MW reference design | 6, reference design 16MW/235m |
| Step-up ratio | Maximum perhaps 1:15 | At least 1:22...25 (no show stopper) |
| Limiting factor(s) | Size and cost ring gear; | Mainly size and cost ring gear |
| | Deformations and deflections | |
| | Critical interfaces | |
| Critical interfaces | Multiple | Not identified; tool carrier principle |
| Modular | Perhaps, with major redesign | Yes, up and eventually downward |
| Scalable | Not easy, several bottlenecks | 'Easy', at least up to 24 - 26MNm+ |
| | | From 6 => 8 planets possible; |
| | | But this would limit step-up ratio |
| Limiting factor(s) | Number of planets; ring gear, mass, | Mainly size and cost ring gear |
| | Cost, deflections and deformations | |
| Housing split | No | Yes, left + right, and central carrier |
| Serviceability | Below standard | State-of-the-art for offshore; up-tower |
| Journal bearings | Partly, in right gearbox part | Most bearing positions |
| Mass | High | Competitive |
| Size | Large | Competitive |
| Cost | High | Competitive |

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

### List of reference numbers

- 1: Turbine rotor
- 2: turbine rotor shaft
- 3: housing of the turbine rotor shaft
- 4: flexible coupling
- 5: transmission system
- 5A: upstream transmission part
- 5B: downstream transmission part
- 6: generator
- 7: upstream planetary gearbox
- 8: bevel gearbox
- 9: downstream planetary gearbox
- 10: generator rotor
- 11: bevel drive gear
- 12: first bevel pinion gear
- 13: second bevel pinion gear
- 14: generator stator
- 15: transmission system common housing
- 16: holding brake + rotor lock
- 17: gondola jaw bearing
- 18: tower
- 19: upstream ring gear
- 20: upstream first planetary gear
- 21: upstream second planetary gear
- 22: second bevel pinion shaft
- 23: second pinion journal bearing
- 24: hollow bevel pinion shaft
- 25: Generator structural housing
- 26: first pinion journal bearing
- 27: transmission system output shaft
- 28: (spline) coupling
- 29: generator rotor shaft
- 30: gondola or nacelle
- 31: helicopter deck
- 32: incoming upstream gearbox shaft
- 33: outgoing upstream gearbox shaft
- 34: upstream sun gear
- 35: planetary gears common shaft
- 36: cooling radiator
- 37: Permanent magnets
- 38: stator coils
- 39: air gap
- 40: gas inlet
- 41: gas outlet
- 42: liquid inlet
- 43: liquid outlet
- 50: downstream ring gear
- 51: downstream sun gear
- 52: downstream planet gears
- 53: downstream planet gear frame
- 54: flexible coupling
- 55: flexible shaft
- 56: further flexible coupling
- 57: liquid cooling
- 58: generator pin (stationary shaft) for holding journal bearings
- XX: generator journal bearings
- 59: hollow generator-rotor shaft
- 61: planet gear pin
- 62: central carrier
- 63: ring gear pin/main gearbox pin
- 64: ring gear bearing
- 65: upstream housing part
- 66: rear upstream gearbox shaft bearing
- 67: driving disk for upstream sun gear
- 68: flexible coupling for upstream sun gear
- 69: flange for upstream sun gear
- 70: driving disk for upstream second planetary gear
- 71: flexible coupling for driving disk for upstream second planetary gear
- 72: bearing for upstream planetary gears
- 73: right housing part
- 74: downstream bearing for upstream gearbox shaft
- 75: upstream ring gear carrier disk

- R: rotor shaft rotational axis
- R1: first and second bevel pinion gear rotational axis
- L: tower longitudinal axis
- P1: first plane of upstream second planetary gear
- P2: second plane of upstream second planetary gear
- Rp: planetary gear rotational axis

The following clauses can be formulated to describe aspects of embodiments. Further, claims are defined at further pages.
1. A wind turbine, comprising:
   - a turbine rotor comprising a set of turbine rotor blades and defining a rotor rotational axis, said turbine rotor mounted on a tower;
   - an electrical generator for converting mechanical energy of said turbine rotor into electrical energy, comprising a generator rotor drivingly coupled to said turbine rotor and mounted on said tower;
   - a transmission system coupling said turbine rotor to said generator rotor, and comprising:
      * a bevel gearbox comprising a bevel drive gear coupled to the turbine rotor and a first bevel pinion gear and a second bevel pinion gear, with said first and second bevel pinion gears having a common rotational axis and in operation rotating counter directional;
      * a downstream planetary gearbox comprising a downstream ring gear, downstream planet gears and a downstream sun gear, with said first bevel pinion drivingly coupled to one of said downstream ring gear and said downstream planet gears, said second bevel pinion drivingly coupled to another of said downstream planet gears and said downstream ring gear, and said generator rotor drivingly coupled to said downstream sun gear.
2. The wind turbine of clause 1, wherein said downstream planetary gearbox is provided between said first and second bevel pinion gear, in particular between said rotor rotational axis and one of said first and second bevel pinion gear.
3. The wind turbine of clause 1 or 2, wherein said first bevel pinion gear is connected to said downstream planet gears, said second bevel pinion gear is connected through a drive shaft to said downstream ring gear, and said downstream sun gear is connected via a transmission system output shaft to said generator rotor, wherein in particular said transmission system output shaft runs through said first bevel pinion gear.
4. The wind turbine of claims any one of the preceding clauses, wherein said downstream planetary gearbox comprises a downstream planet carrier for rotatably holding said downstream planet gears, wherein said one selected of said first bevel pinion gear, and second bevel pinion gear is coupled to said downstream planet carri er.
5. The wind turbine of any one of the preceding clauses, further comprising an upstream planetary gearbox, coupling said turbine rotor and said bevel gearbox, in particular said upstream planetary gearbox comprises a 1.5 stage planetary gearbox.
6. The wind turbine of any one of the preceding clauses, wherein said upstream planetary gearbox comprises a planetary transmission, in particular comprising an upstream ring gear drivingly coupled to said turbine rotor, and an upstream sun gear drivingly coupled to said drive shaft gear.
7. The wind turbine of the preceding clauses, wherein said upstream planetary gearbox comprises an upstream planet gear system having a first and second planetary gear on a common shaft, with first planetary gear drivingly coupled with said ring gear and said second planetary gear drivingly coupled with said sun gear.
8. The wind turbine of any one of the preceding clauses 5 or 6, wherein said upstream planetary gearbox provides a gear ratio of 10-15.
9. The wind turbine of any one of the preceding clauses, wherein said turbine rotor is mounted on said tower with its rotor rotational axis functionally perpendicular to a tower longitudinal axis.
10. The wind turbine of any one of the preceding clauses, wherein said turbine rotor is fixed to one end of a hollow turbine rotor shaft, said hollow turbine shaft extending through a housing with said housing fixed to a nacelle on said tower, and an opposite end of hollow turbine rotor shaft carrying said transmission system and said generator.
11. The wind turbine of any one of the preceding clauses, wherein said generator comprises a housing and a cooling system.
12. The wind turbine of any one of the preceding clauses including clause 11, wherein said cooling system comprises a gas cooling system, said gas cooling system comprising a gas cooling inlet in said generator housing for entering a flow of cooling gas into said generator, and a gas cooling outlet for allowing gas to exit said generator housing.
13. The wind turbine of clause 12, wherein said generator rotor is provided with one or more fanes for setting said cooling gas inside said housing in motion, in particular designed for in operation inducing a flow of cooling gas from said cooling gas inlet to said cooling gas outlet.
14. The wind turbine of any one of clauses 11-13, wherein said stator is provided with one or more provisions, in particular passages, for setting said cooling gas inside said housing in motion, in particular designed for in operation inducing a flow of cooling gas from said cooling gas inlet to said cooling gas outlet.
15. The wind turbine of any one of clauses 13-14, wherein said gas cooling system comprises a heat exchanger for exchanging heat with a liquid flow.

## Claims

1. A wind turbine, comprising:
- a turbine rotor comprising a set of turbine rotor blades and defining a rotor rotational axis, said turbine rotor mounted on a tower;
- an electrical generator for converting mechanical energy of said turbine rotor into electrical energy, comprising a generator rotor drivingly coupled to said turbine rotor and mounted on said tower;
- a transmission system coupling said turbine rotor to said generator rotor, and comprising:
an upstream stepped planetary gearbox comprising a upstream ring gear drivingly coupled to said turbine rotor, upstream first planet gears drivingly coupled with said upstream ring gear, upstream second planet gears, each rotationally coupled with a first planet gear, an upstream sun gear drivingly coupled to said upstream second and coupled to said generator rotor, and said upstream second planet gears are axially offset to one another.

2. The wind turbine of claim 1, wherein said upstream stepped planetary gearbox comprises at least four upstream second planetary gears, in particular at least two sets of at least 2 upstream second planetary gears, more in particular at least two sets of at least 3 upstream second planetary gears, wherein in particular said upstream second planetary gears of each set are functionally in an axial plane, and said axial planes are axially offset with respect to one another, in particular allowing said second planetary gears to overlap.

3. The wind turbine of any one of the preceding claims, comprising a common carrier rotationally carrying said upstream first and second planetary gears rotatable about their axes of rotation, rotationally carrying said upstream sun gear, and rotationally carrying said upstream ring gear, wherein in particular the wind turbine comprises planet pins fixed to said common carrier and each holding a said upstream first planet gear and a said upstream second planet gear, with said upstream first planet gear and said upstream second planet gear rotationally coupled.

4. The wind turbine of any one of the preceding claims, wherein each said upstream first planetary gear is rotatably carried on a fixed pin and each said upstream second planetary gear is rotatably carried on a said fixed pin, and said upstream first planetary gear and said upstream second planetary gear on a said pin are rotationally coupled, in particular via a flexible coupling, more in particular coupled via a shaft running through said fixed pin.

5. The wind turbine of any one of the preceding claims when depending on claim 3, wherein said common carrier carries a ring pin rotatably carrying said upstream ring gear.

6. The wind turbine of any one of the preceding claims when depending on claim 3, wherein said common carrier rotatably carries said upstream sun gear.

7. The wind turbine of any one of the preceding claims, wherein said upstream sun gear is coupled to an output shaft via a flexible coupling.

8. The wind turbine of any one of the preceding claims, wherein said transmission system further comprises a bevel gearbox coupled to said upstream sun gear, in particular further comprising a downstream planetary gearbox coupling said bevel gearbox to said generator rotor, and/or in particular wherein said bevel gearbox comprises a bevel gear coupled to said upstream sun gear, and two opposite bevel pinions coupled to said bevel gear, and one said bevel pinion coupled to a downstream ring gear and one said bevel pinion coupled to a downstream planet gear carrier, and a downstream sun gear coupled to said generator rotor.

9. The wind turbine of any one of the preceding claims, wherein said upstream first planet gears are each rotatable about their planet rotational axes which have a fixed position with respect to said rotational axis, in particular, wherein said planet rotational axes are functionally parallel to said rotational axis.

10. A wind turbine comprising a turbine rotor with a turbine rotor rotational axis and drivingly coupled to an upstream planetary gearbox which is drivingly coupled to a right angled transmission having two opposite gears drivingly coupled via a downstream planetary gearbox to a generator rotor of a generator, in particular an outer rotor permanent magnet generator with a central stator, said generator rotor in particular defining a generator rotational axis which is functionally at a right angle with said turbine rotor rotational axis.

11. A transmission system for a wind turbine for coupling a turbine rotor to a generator comprising a rotor, said transmission system comprising:
- a bevel gearbox comprising a bevel drive gear for coupling to the turbine rotor and a first bevel pinion gear and a second bevel pinion gear drivingly coupled with said bevel drive gear, with said first and second bevel pinion gears having a common rotational axis and in operation rotating counter directional,
- un upstream planetary gearbox comprising an upstream ring gear, upstream planet gears and an upstream sun gear, drivingly coupled to said bevel drive gear, and
- a downstream planetary gearbox comprising a downstream ring gear, downstream planet gears and a downstream sun gear, with said first bevel pinion drivingly coupled to one of said downstream ring gear, downstream planet gears and downstream sun gear, said second bevel pinion drivingly coupled to another of said downstream ring gear, downstream planet gears and downstream sun gear, and said downstream sun gear for drivingly coupling to said generator rotor.

12. A transmission system for a wind turbine for coupling a turbine rotor to a generator comprising a rotor, said transmission system comprising:
- a bevel gearbox comprising a bevel drive gear for coupling to the turbine rotor and a first bevel pinion gear and a second bevel pinion gear drivingly coupled with said bevel drive gear, with said first and second bevel pinion gears having a common rotational axis and in operation rotating counter directional, and
- a downstream planetary gearbox comprising a downstream ring gear, downstream planet gears and a downstream sun gear, with said first bevel pinion drivingly coupled to one of said downstream ring gear and said downstream planet gears, said second bevel pinion drivingly coupled to another of said downstream ring gear and said downstream planet gears, and said downstream sun gear for drivingly coupling to said generator rotor.

13. A stepped planetary gearbox comprising a ring gear drivingly coupled to first planet gears, second planet gears each rotationally coupled to a said first planet gears, and a sun gear drivingly coupled to said second planet gears, wherein said second planet gears are axially offset to one another.

14. The stepped planetary gearbox of claim 13, comprising at least four said second planet gears in two sets, wherein the second planet gears in each set are functionally in one axial plane, and said axial planes are axially offset.

15. The stepped planetary gearbox of claim 13 or 14, wherein said ring gear is rotatable about a ring gear rotational axis, and said first planet gears are each rotatable about their planet rotational axes which have a fixed position with respect to said ring gear rotational axis, and/or wherein said planet rotational axes are functionally parallel to said ring gear rotational axis.
